# EUROPÄISCHE PATENTSCHRIFT

(11) **EP 1 791 135 B1**
(45) Veröffentlichungstag und Bekanntmachung des Hinweises auf die Patenterteilung: **24.07.2013**
(21) Anmeldenummer: 06024447.2
(22) Anmeldetag: 24.11.2006
(51) Int. Cl.: G21K 1/06, B82Y 10/00

(54) **Röntgen-Optisches-Element**
X-ray optical element
Elément de radiographie optique

(30) Priorität: 25.11.2005 DE 102005057700
(43) Veröffentlichungstag der Anmeldung: 30.05.2007
(73) Patentinhaber: Axo Dresden GmbH, 01809 Heidenau (DE)
(72) Erfinder: Dietsch, Reiner, 01217 Dresden (DE); Holz, Thomas, 01109 Dresden (DE)
(74) Vertreter: Pfenning, Meinig & Partner GbR

(56) Entgegenhaltungen:
- EP-A- 1 318 524
- WO-A-99/43009
- DE-U1- 29 924 579
- GB-A- 776 027
- US-A- 5 142 561
- US-A1- 2005 025 281

## Beschreibung

Die Erfindung betrifft Röntgen-Optische-Elemente, die in der Regel mit Gradientenmultilayerspiegeln versehen sind. Dabei handelt es sich um eine verbesserte Form einer nebeneinander (side-by-side) Anordnung nach Montel. Solche Röntgenoptiken sind in der Lage, die Strahlung einer Röntgenstrahlquelle in beiden Raumrichtungen zu kollimieren oder zu fokussieren und werden meist in Verbindung mit ortsauflösenden Flächenzählern (2D-Detektoren), in der Röntgendiffraktometrie bzw. der Kleinwinkelstreuung oder zur lokalen Anregung von Fluoreszenzstrahlung in der Röntgenfluoreszenzanalyse eingesetzt.

Das Prinzip der side-by-side oder Anordnung nach Montel zweier gekrümmter Spiegel wurde bereits 1960 von Cosslett und Nixon;"X-Ray Microscopy"; Cambridge at the university press; 1960 und in dieser Form als ein Beispiel auch in DE 699 09 599 T2 beschrieben. Montel-Optiken zeichnen sich durch einen hohen Photonenfluss auf der Probe, eine kompakte äußere Form, nahezu gleiche Strahleigenschaften in den Raumrichtungen senkrecht zur Strahlrichtung und eine leichtere Handhabbarkeit und Justierbarkeit gegenüber der ebenfalls von Cosslett und Nixon zitierten Anordnung von Röntgenspiegeln in Kirkpatrick-Baez-Geometrie (KB-Anordnung) aus.

Statt hintereinander (KB-Anordnung) liegen die beiden strahlformenden Röntgenspiegel (Elementarspiegel) in der Montel-Anordnung nebeneinander (side-by-side) und bilden die Röntgenquelle ab. Jeder Elementarspiegel der side-by-side Anordnung bzw. der KB-Anordnung besitzt eine zylindersymmetrische Oberflächenkontur, d.h. diese Spiegel sind als Planparabel (kollimierende bzw. Parallelstrahloptik) oder Planellipse (fokussierende Optik) ausgeführt. Zur zweidimensionalen Strahlformung ist die Reflexion an beiden Elementarspiegeln erforderlich, was also insgesamt zwei Reflexionen bedeutet (d.h. die Transmission der Optik ist proportional zu R² wenn als R das Reflexionsvermögen eines Elementarspiegels bezeichnet ist).

Bei der side-by-side Optik nach Montel werden die Elementarspiegel unter einem rechten Winkel (90°) zusammengefügt, um die exakte Abbildung der Röntgenquelle zu gewährleisten, was sowohl bei Cosslett und Nixon als auch in DE 69909599 T2 (vgl. insbesondere Patentanspruch 1) beschrieben ist.

Rechtwinklig zueinander liegen auch die optimal justierten Spiegel in der KB-Anordnung hintereinander.

Bei diesen beiden bekannten Anordnungen, fallen der meridionale und der sagittale Brennpunkt der Optiken am einem Punkt in Strahlrichtung zusammen.

Sowohl Cosslett und Nixon, wie auch U.W. Arndt; "Focusing Optics for Laboratory Sources in X-ray Cristallography"; J. Appl. Cryst.; (1990) 23; S. 161-168 beschreiben die Möglichkeit der zweidimensionalen Strahlformung mit nur einer Reflexion an einer gleichzeitig in meridional und sagittal gekrümmten paraboloidalen bzw. ellipsoidalen Oberfläche. Der Vorteil dieser Lösung liegt in der um den Betrag 1/R (R statt R²) höheren Transmission des optischen Elements gegenüber der side-by-side Anordnung nach Kirkpatrick-Baez, da die zweite Reflexion nicht stattfindet. Von Nachteil kann sein, dass die Unterdrückung störender Teile des Emissionsspektrums der Röntgenquelle ebenfalls nicht mit R² sondern nur mit R erfolgt.

Bei Vorliegen einer Rotationssymmetrie fallen ebenfalls meridionaler und sagittaler Brennpunkt in Strahlrichtung zusammen.

Bedeutsam ist dabei auch die Brillanz der Röntgenstrahlquelle. Sie ist umso höher, je höher die eingebrachte thermische Leistung auf der Anode ist.

U.W. Arndt führt u.a. aus, dass es einen Zusammenhang zwischen der Form des thermischen Röhrenfokus und der eingebrachten thermischen Leistung auf dem Brennfleck der Röntgenquelle gibt. Wenn x und y die Maße des thermischen Brennflecks auf einer Cu-Anode wären, ergäbe sich bei y/x=1 eine maximale thermische Leistung von 460 W/mm (die Längenangabe bezieht sich auf die Seitenlängen eines Vierecks mit dem Flächeninhalt x * y = A), während bei einem Verhältnis y/x=10 ein Anstieg auf 630 W/mm beobachtet werden kann.

Aufgrund dieser Tatsache besitzen die heute verwendeten Laborröntgenröhren thermische Brennflecke, die ein Verhältnis y/x > 10 (z.B. 8mm/0.4mm) und damit natürlich eine höhere Brillanz, als dies bei vergleichbaren Röntgenstrahlquellen mit quadratischem thermischen Brennfleck, der Fall ist, erreichen.

Betrachtet man einen thermischen Brennfleck einer Röntgenstrahlquelle unter dem Abnahmewinkel α, erscheint entweder in y-Richtung ein üblicherweise so bezeichneter optischer Punktbrennfleck mit der Ausdehnung [x , z=y*sin(α)] oder in x-Richtung ein Strichbrennfleck mit der Ausdehnung [z=x*sin(α), y] (z.B. Strich 0.04mm * 8mm, Punkt 0.4mm * 0.8mm).

Die geometrischen Brennflecke stellen also eine Projektion des thermischen Brennflecks der Röntgenstrahlquelle in eine geometrische Ebene dar. Selbst wenn die Projektion einen quadratischen und damit symmetrischen Brennfleck liefert, entsteht die Röntgenstrahlung doch im thermischen Brennfleck, der eine räumliche Ausdehnung in Strahlrichtung besitzt und damit ist es von Vorteil, wenn die Abbildungseigenschaften einer Optik diesem besonderen Merkmal der Strahlungsentstehung Rechnung trägt.

Beim Strichbrennfleck ist die Ausdehnung in Strahlrichtung vernachlässigbar gering zur Akzeptanz eines Elementarspiegels bei 0.4mm bzw. 0.04mm , aber bei Punktbrennflecken schon recht erheblich (8mm zu 0,8mm).

Es gibt eine Diskrepanz zwischen dem geometrischen Brennpunkt (Optikfokus) nebeneinander angeordneter Elementarspiegel (side-by-side) in der Ebene senkrecht zur Strahlrichtung und dem realen und nicht symmetrischen thermischen Brennpunkt in der Ebene der Anodenoberfläche der Röntgenstrahlquelle, die obendrein gegen die Ebene senkrecht zur Strahlrichtung um den Abnahmewinkel 90°- α geneigt ist.

Es ist nicht zwingend so, dass die identischen Elementarspiegel in side-by-side Anordnung auch einen symmetrischen Strahlquerschnitt in der Abbildung des thermischen Brennflecks erzeugen (Quadrat bzw, Kreis) müssen, wenn der reale Röntgenröhrenbrennpunkt in x und y-Richtung unterschiedliche Ausdehnungen hat. Vielmehr ist zu erwarten, dass ein real vorhandener Rechteckbrennfleck auch in einen Rechteckbrennpunkt oder ein ellipsenförmiger Brennfleck wieder in eine Ellipse abgebildet werden.

Wann der meridionale und der sagittale Brennpunkt zusammenfallen, dann liegt der geometrische Brennpunkt (Optikfokus) der Röntgenoptik auzerdem nicht auf dem gesamten thermischen Brennfleck sondern nur auf einem kleinen Ausschnitt davon. Es ist nicht auszuschließen, dass sich lokal auf dem thermischen Brennfleck Orte unterschiedlich hoher thermischer Belastung und damit unterschiedlicher Brillanz befinden. Falls bestimmte Einflüsse die Lage des thermischen Brennflecks auf der Anode relativ zum geometrischen Brennpunkt der Optik verschieben, können Intensitätsschwankungen am Ort der Frobe die Folge sein.

US 2005/0025281 A1 beschreibt ein System zur Röntgenstrahlformung mit einer Kirkpatrick-Baez Beugungsoptik, wobei eines von zwei röntgenoptischen Elementen ein Kristall ist.

In GB 776 027 A wird ein reflexionsoptisches System beschrieben, das unter großen Einfallswinkeln arbeitet und dadurch gekennzeichnet ist, dass zwei konkave, sphärische Spiegelelemente in einem rechten Winkel zueinander angeordnet sind und ihre Scheitelpunkte auf gleicher Höhe liegen.

Eine side-by-side Anordnung von Multischicht-Spiegeln, die eine Bragg-Reflexion von Röntgenstrahlung erzeugen, wird in WO 99/43009 A beschrieben.

US-A-5 142 561 beschreibt ein röntgenlithografisches System mit einem länglichen, konkaven Abtastspiegel, dessen Oberfläche als Teil einer Torusfläche mit zwei verschiedenen Krümmungsradien ausgebildet ist.

Ein System von zwei gegeneinander verkippbaren Röntgen-Spiegeln, deren Kippung von 90° abweicht, um den kombinierten Akzeptanzbereich beider Spiegel der Quelle oder dem Zielbereich anzupassen, wird in EP 1 318 524 A2 beschrieben.

DE 299 24 579 U1 beschreibt eine Nebeneinanderlageoptik mit Mehrschicht-Bragg-Röntgenstrahlreflexionsflächen, die unter einem Winkel von 90° derart angebracht sind, dass die Optik um zwei Achsen, die jeweils in den Reflexionsflächen liegen, drehbar ist.

Es ist daher Aufgabe der Erfindung, Röntgen-Optische-Elemente zur Verfügung zu stellen, mit denen eine gezielte Beeinflussung der Strahlgeometrie und/oder eine Beeinflussung weiterer Charakteristika reflektierter Röntgenstrahlung, bei einer nebeneinander Anordnung zweier reflektierender Elemente erreichbar ist.

Erfindungsgemäß wird diese Aufgabe mit Röntgen-Optischen-Elementen, die die Merkmale des Anspruchs 1 aufweisen, gelöst. Vorteilhafte Ausgestaltungen und Weiterbildungen können mit den in den untergeordneten Ansprüchen bezeichneten Merkmalen erreicht werden. Verwendungen sind mit Anspruch 8 benannt.

So ist die erfindungsgemäße Lösung in vielen Punkten analog zu der aus DE 699 09 599 T2 bekannten aufgebaut. Dabei ist das erfindungsgemäße Röntgen-Optische-Element analog zu der von Montel beschriebenen Anordnung ebenfalls mit zwei nebeneinander angeordneten, die Röntgenstrahlung reflektierenden Elementen, ausgebildet. Die reflektierenden Oberflächen sind dabei gekrümmt. Dies kann parabolisch oder elliptisch sein. Es kann aber auch eine Kombination einer parabolischen und elliptischen Krümmung an jeweils einem der reflektierenden Elemente ausgebildet sein.

Dabei wird ein von einer Röntgenstrahlquelle emittierter Röntgenstrahl auf die beiden reflektierenden nebeneinander angeordneten und bevorzugt miteinander verbundenen Elemente gerichtet und von dem einen reflektierenden Element in einer Achse und vom anderen Element in einer zweiten Achse reflektiert. Der von den beiden reflektierenden Elementen reflektierte Anteil der Röntgenstrahlung trifft auf eine weitere im Strahlengang nachfolgende Fläche des jeweils anderen reflektierenden Elementes auf und wird dort ein zweites mal, in diesem Fall in der anderen Achse, reflektiert.

Dabei weichen die Krümmungswinkel der beiden reflektierenden Elemente voneinander ab, so dass sie eine unterschiedliche Brennweite aufweisen. Diese Winkelabweichung kann gering gehalten sein und im Bereich von 0,01 bis zu einigen wenigen 1/10 Grad liegen.

Mit dem gezielten Einsatz eines "räumlichen Auseinanderfallen" des meridionalen und des sagittalen Brennpunktes, gelingt es besser, die o.g. Diskrepanz auszuräumen und Fluktuationen in der Intensität, die aus Lageschwankungen des thermischen Brennflecks von Röntgenstrahlquellen resultieren, zu minimieren.

Die Verwendung unterschiedlicher reflektierender Elemente gestattet es bei fokussierenden side-by-side Anordnungen das Abbildungsverhältnis in x und y-Richtung so zu beeinflussen, dass annähernd ein quadratischer bzw. ein kreisförmiger Strahlquerschnitt des von den beiden reflektierenden Elementen reflektierten Röntgenstrahles und ein entsprechende Brennfleckgeometrie am Probenort ausgebildet wird.

Die von den beiden reflektierenden Elementen reflektierte Röntgenstrahlung kann bzgl. eines oder mehrerer Charakteristika lokal beeinflusst werden, wobei dies in zwei Dimensionen erreicht werden kann. Im Anschluss an die Reflexion der Röntgenstrahlung wird diese über ihren Querschnitt beeinflusst, was sich auch am Ort der Abbildung, beispielsweise an einer Probe, ausnutzen lässt.

So können folgende Charakteristika der erfindungsgemäß reflektierten Röntgenstrahlung beeinflusst werden: Homogenität, Photonendichteverteilung über den Querschnitt des reflektierten Röntgenstrahles. Seine Querschnittsform und die Größe der Querschnittsfläche. Einfluss kann auch auf die Divergenz genommen werden.

Mit der Nutzung des Astigmatismus verwandelt sich der quellseitige Brennpunkt röntgenoptischer Systeme in ein in Strahlrichtung ausgedehntes Brennpunktvolumen, das den realen thermischen Brennfleck besser in die optische Abbildung integriert.

Bei kollimierenden Optiken ist man über die gezielte Beeinflussung des Parabelparameters in der Lage, Divergenzunterschiede in den beiden Raumachsrichtungen anzugleichen. Diese resultieren meist aus der nichtsymmetrischen Form von Brennflecken der Röntgenstrahlungsquellen (rechteckig, elliptisch), die in der Regel zur Abbildung gelangen.

Aus dem Brennpunkt wird ein Brennpunktbereich zwischen meridionalem und sagittalem Brennpunkt.

Legt man mittels der unterschiedlich gekrümmten reflektierenden Elemente den thermischen Brennfleck in den Brennpunktbereich steigt der tatsächlich zur Abbildung beitragende Flächenanteil des thermischen Brennflecks an. Zeitliche Schwankungen des Photenflusses, resultierend aus lokalen Unterschieden der Brillanz auf dem thermischen Brennfleck und der Wanderung dieser auf der Anodenoberfläche können wegen der Mittelung über eine größere Fläche nahezu vollständig ausgeglichen werden.

Nicht symmetrische Strahlquerschnitte der von Röntgenstrahlquellen emittierten Röntgenstrahlung können zu symmetrischen geformt und so auch am Probenort abgebildet werden, wenn gezielt verschiedene reflektierende Elemente verwendet werden.

Von Vorteil sind die verbesserte Homogenität und Symmetrie des Strahlquerschnitts, seine verbesserte zeitliche Stabilität und gleichzeitig die optimale Intensität im abgebildeten Brennfleck auf der Probe.

Die Realisierung einer "astigmatischen" Abbildung, die zumindest annähernd symmetrisch sein kann, wird über zwei verschiedene Gradientenmultischichten in (side-by-side) einer nebeneinander Anordnung zweier reflektierender Elemente realisiert.

Die Abstände von quellseitigem Brennpunkt zur Mitte der zwei reflektierenden Elemente unterscheiden sich bei beiden reflektierenden Elemente entsprechend des gewählten sagittalen bzw. meridionalen Brennpunktabstandes, wobei speziell bei der fokussierenden Anordnung der Abstand von der Mitte der beiden reflektierenden Elemente zum Brennpunkt am Ort einer Probe gleich ist oder gleich sein kann.

Auch wenn sich die Ellipsenparameter a und b der beiden reflektierenden Elemente unterscheiden, kann die Symmetrie des Konvergenzwinkels in den beiden Achsrichtungen senkrecht zur Strahlrichtung am Probenort dennoch eingehalten werden.

Bei einer kollimierenden Ausbildung von Röntgen-Optischen-Elementen kann ein symmetrischer (quadratischer oder kreisförmiger) Strahlquerschnitt mittels geeigneter Wahl der beiden Parabelparameter p der beiden reflektierenden Elemente erreicht werden.

Die Abstände von aus Richtung der Röntgenstrahlquelle betrachteter Brennpunkte zur Mitte der reflektierenden Elemente unterscheiden sich bei beiden reflektierenden Elementen in bevorzugter Ausführung bzgl des meridionalen und sagittalen Brennpunktabstandes. Bei einer Fokussierung in Richtung auf eine Probe sollte der Abstand der Brennpunkte von der Mitte der reflektierenden Elemente zum Probenort gleich sein.

Die reflektierenden Elemente sind bevorzugt an ihren Oberflächen mit einem Gradientenmultischtsystem versehen, bei dem aus den jeweils lokal unterschiedlichen Einfallswinkeln und der jeweiligen Wellenlänge der Röntgenstrahlung die unterschiedlichen Dicken von Einzelschichten abgeleitet sind.

Es soll zur Erreichung einer erhöhten Reflektivität die Bragg-Bedingung λ=2 d_{eff} * sin θ berücksichtigt werden.

Neben gradierten Schichtdickenverteilungen in lateraler Richtung können an Multischichtsystemen auch in ihrer Tiefe gradierte Schichtdickenverteilungen realisiert sein.

Die Erfindung kann außerdem vorteilhaft im Gegensatz zu den bekannten Lösungen so ausgebildet sein, dass die beiden reflektierenden Elemente in einem Winkel kleiner als 90° zueinander ausgerichtet sind. Dadurch kann in der reflektierten Abbildung ein sich überlappender Bereich der Röntgenstrahlung mit erhöhter Intensität erreicht werden. Die Winkelneigung kann dabei nur geringfügig kleiner als 90 ° gewählt sein.

Nachfolgend soll für eine beispielhafte Erläuterung auf Figuren zurückgegriffen werden.

Dabei zeigen:

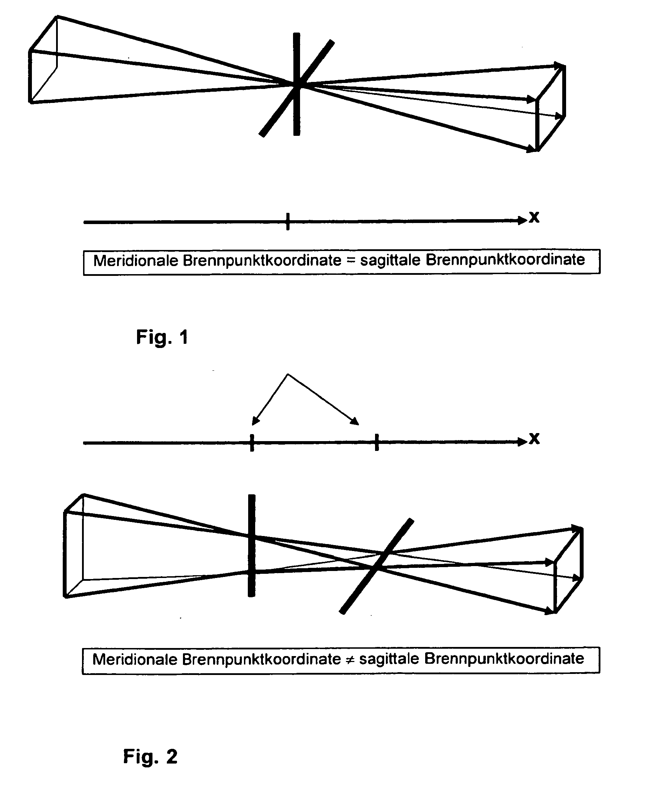

Figur 1 - in schematischer Form die Röntgenstrahlführung bei einem bekannten System, wie es beispielsweise in DE 699 09 599 T2 beschrieben ist, und
Figur 2 - eine Röntgenstrahlführung, die mit erfindungsgemäßen Röntgen-Optischen-Elementen erreichbar ist.

Dabei wird deutlich, dass mit einem erfindungsgemäßen Röntgen-Optischen-Element die beiden Brennpunkte in Richtung der auf eine Probe reflektierten Röntgenstrahlung innerhalb eines Brennpunktvolumens angeordnet und daher die beiden reflektierenden Elemente unterschiedliche Brennweiten aufweisen.

## Patentansprüche

1. Röntgen-Optisches-Element zur Reflexion von Röntgenstrahlung mit Beeinflussung von Röntgenstrahlcharakteristika im Querschnitt reflektierter Röntgenstrahlung in zwei Dimensionen, bei dem zwei reflektierende, gekrümmte Elemente nebeneinander angeordnet sind und Röntgenstrahlung einer Röntgenstrahlquelle auf beide reflektierende Elemente gerichtet und dann von einem Element auf das jeweils andere Element reflektiert wird, **dadurch gekennzeichnet, dass** die beiden reflektierenden Elemente mit unterschiedlichen Winkeln gekrümmt sind und unterschiedliche Brennweiten aufweisen; wobei sich ein Brennpunktbereich zwischen mexiodionalem und sagittalem Brennpunkt der reflektierenden Elemente ergibt, so dass die Brennpunkte der von den beiden reflektierenden Elementen reflektierten Röntgenstrahlung innerhalb eines Brennpunktvolumens angeordnet sind.

2. Element nach Anspruch 1, **dadurch gekennzeichnet, dass** die beiden reflektierenden Elemente unmittelbar nebeneinander angeordnet sind und in einem Winkel von 90° zueinander ausgerichtet sind.

3. Element nach Anspruch 1, **dadurch gekennzeichnet, dass** die beiden reflektierenden Elemente unmittelbar nebeneinander angeordnet sind und in einem Winkel kleiner als 90° zueinander ausgerichtet sind.

4. Element nach einem der vorhergehenden Ansprüche, **dadurch gekennzeichnet, dass** die reflektierenden Elemente parabolisch oder elliptisch gekrümmt sind.

5. Element nach einem der vorhergehenden Ansprüche, **dadurch gekennzeichnet, dass** die reflektierenden Elemente mit gradierte Schichtdicken aufweisenden Multischichtsystemen gebildet sind.

6. Element nach einem der vorhergehenden Ansprüche, **dadurch gekennzeichnet, dass** die Schichttiefen eines Multischichtsystems gradiert sind.

7. Element nach einem der vorhergehenden Ansprüche, **dadurch gekennzeichnet, dass** Röntgenstrahlung unter Einhaltung der Bragg-Bedingung auf die reflektierenden Elemente gerichtet und diese Bedingung auch bei den Reflexionen berücksichtigt ist.

8. Verwendung eines Elementes nach einem der Ansprüche 1 bis 7 zur lokalen und/oder zeitlichen Beeinflussung der Homogenität, der Energie/Photonendichte über den Querschnitt, der Querschnittsform, der Querschnittsfläche der reflektierten Röntgenstrahlung und/oder deren Divergenz.

## Claims

1. An X-ray optical element for reflecting X-radiation, having an influence on the X-ray characteristics in the cross-section of reflected X-radiation in two dimensions, in which two reflecting curved elements are arranged side by side and X-radiation from an X-ray source is directed towards both reflecting elements and is then reflected from one element to the respectively other element, **characterised in that** the two reflecting elements are curved at different angles and have different focal lengths; wherein a range of focal points is produced between the meridional and the sagittal focal point of the reflecting elements, with the result that the focal points of the X-radiation reflected by the two reflecting elements are in particular arranged within a focal point volume.

2. An element according to Claim 1, **characterised in that** the two reflecting elements are arranged directly side by side and are set up at an angle of 90° to one another.

3. An element according to Claim 1, **characterised in that** the two reflecting elements are arranged directly side by side and are set up at an angle of less than 90° to one another.

4. An element according to one of the preceding claims, **characterised in that** the reflecting elements are curved parabolically or elliptically.

5. An element according to one of the preceding claims, **characterised in that** the reflecting elements are formed by means of multilayer systems having graded layer thicknesses.

6. An element according to one of the preceding claims, **characterised in that** the layer depths in a multilayer system are graded.

7. An element according to one of the preceding claims, **characterised in that** the Bragg condition is observed in the X-radiation directed towards the reflecting elements, and this condition is also taken into account in the reflections.

8. Use of an element according to one of Claims 1 to 7 for local and/or temporal influence on the homogeneity, energy/photon density over the cross-section, the cross-sectional shape, the surface area of the cross-section of the reflected X-radiation and/or the divergence thereof.

## Revendications

1. Élément de radiographie optique destiné à la réflexion d'un rayonnement X avec influence des caractéristiques des rayons X en section transversale du rayonnement X réfléchi bidimensionnel, dans lequel deux éléments réfléchissants courbes sont disposés l'un à côté de l'autre et un rayonnement X d'une source de rayons X est dirigé sur les deux éléments réfléchissants, puis est réfléchi d'un élément sur l'autre élément respectif, **caractérisé en ce que** les deux éléments réfléchissants sont courbés selon des angles différents et présentent des distances focales différentes, une zone du point focal s'établissant entre le point focal tangentiel et le point focal sagittal des éléments réfléchissants, de sorte que les points focaux du rayonnement X réfléchi par les deux éléments réfléchissants sont disposés à l'intérieur d'un volume du point focal.

2. Élément selon la revendication 1, **caractérisé en ce que** les deux éléments réfléchissants sont disposés directement l'un à côté de l'autre et sont orientés l'un par rapport à l'autre selon un angle de 90 °.

3. Élément selon la revendication 1, **caractérisé en ce que** les deux éléments réfléchissants sont disposés directement l'un à côté de l'autre et sont orientés l'un par rapport à l'autre selon un angle inférieur à 90 °.

4. Élément selon l'une quelconque des revendications précédentes, **caractérisé en ce que** les éléments réfléchissants présentent une courbure parabolique ou elliptique.

5. Élément selon l'une quelconque des revendications précédentes, **caractérisé en ce que** les éléments réfléchissants sont formés par des systèmes multicouches présentant des épaisseurs de couches graduées.

6. Élément selon l'une quelconque des revendications précédentes, **caractérisé en ce que** les profondeurs des couches d'un système multicouche sont graduées.

7. Élément selon l'une quelconque des revendications précédentes, **caractérisé en ce qu'**un rayonnement X est dirigé sur les éléments réfléchissants en respectant la condition de Bragg, et cette condition est également prise en compte lors des réflexions.

8. Utilisation d'un élément selon l'une quelconque des revendications 1 à 7 pour influer localement et/ou dans le temps sur l'homogénéité, la densité énergie/photon sur la section transversale, la forme de la section transversale, la surface de la section transversale du rayonnement X réfléchi et/ou la divergence de celui-ci.
